# EUROPÄISCHE PATENTSCHRIFT

(11) **EP 2 673 175 B1**
(45) Veröffentlichungstag und Bekanntmachung des Hinweises auf die Patenterteilung: **15.03.2017**
(21) Anmeldenummer: 12703037.7
(22) Anmeldetag: 31.01.2012
(51) Int. Cl.: B60T 8/1755, B60W 30/18, B60T 8/88

(54) **VORRICHTUNG ZUM KOMPENSIEREN EINES STÖRGIERMOMENTS BEI EINEM FAHRZEUG MIT MINDESTENS ZWEI RADINDIVIDUELLEN ANTRIEBEN**
DEVICE FOR COMPENSATING AN ABNORMAL YAWING MOMENT IN A VEHICLE HAVING AT LEAST TWO WHEEL-INDIVIDUAL DRIVES
DISPOSITIF DE COMPENSATION D'UN COUPLE DE LACET DÛ À UNE DÉFAILLANCE SUR UN VÉHICULE AVEC AU MOINS DEUX MOTEURS DE ROUES INDIVIDUELS

(30) Priorität: 07.02.2011 DE 102011003693
(43) Veröffentlichungstag der Anmeldung: 18.12.2013
(73) Patentinhaber: Robert Bosch GmbH, 70442 Stuttgart (DE)
(72) Erfinder: ERBAN, Andreas, 74369 Loechgau (DE)
(86) Internationale Anmeldenummer: PCT/EP2012/051503
(87) Internationale Veröffentlichungsnummer: WO 2012/107318

(56) Entgegenhaltungen:
- DE-A1-102009 030 816
- US-A- 5 376 868
- US-A1- 2008 071 451

## Beschreibung

### GEBIET DER ERFINDUNG

Die vorliegende Erfindung betrifft eine Vorrichtung zum Kompensieren eines Störgiermoments bei einem Fahrzeug mit mindestens zwei radindividuellen Antrieben. Die Erfindung betrifft ferner ein mit einer solchen Vorrichtung ausgestattetes Fahrzeug sowie ein Computerprogramm, um eine softwaremäßig steuerbare Vorrichtung zu den Funktionen der erfindungsgemäßen Vorrichtung zu befähigen.

### STAND DER TECHNIK

Bei Kraftfahrzeugen ist es ein grundlegendes Sicherheitsbedürfnis, ein unkontrolliertes Ausbrechen oder Schleudern des Fahrzeugs weitestgehend zu vermeiden.

Bei herkömmlichen Kraftfahrzeugen resultieren schwer kontrollierbare Fahrsituationen häufig aus nicht-situationsgerechten Steuermaßnahmen des Fahrers, beispielsweise durch übermäßiges Bremsen oder Lenken. Um das Fahrzeug in solchen Situationen kontrollierbar zu halten, wurden Assistenzsysteme wie ABS (Antiblockiersystem) und ESP (elektronisches Stabilisierungsprogramm) entwickelt, bei denen mit Hilfe geeigneter Radsensoren eine Winkelgeschwindigkeit der einzelnen Räder überwacht wird und gegebenenfalls mittels der radindividuellen Bremsen oder durch Umlenken der vom Motor bereitgestellten Antriebskraft auf einzelne Räder bewirkt wird, dass einzelne Räder derart verzögert bzw. beschleunigt werden, dass einem Giermoment des Fahrzeugs entgegengewirkt werden kann.

Insbesondere bei Elektro- und Hybridfahrzeugen gelangen zunehmend radindividuelle Antriebe zur Anwendung. Dabei werden nicht mehr, wie bei herkömmlichen Fahrzeugen, Räder an gegenüberliegenden Seiten des Fahrzeugs über einen gemeinsamen Antrieb, gegebenenfalls unter Zwischenschaltung von Getrieben und Differentialen, angetrieben. Stattdessen haben einzelne Räder des Fahrzeugs jeweils einen eigenen, ihnen zugeordneten Antrieb. Solche radindividuellen Antriebe können beispielsweise als Elektromaschinen realisiert sein, die über eine Welle das ihnen zugeordnete Rad antreiben oder die direkt in das Rad integriert sein können.

Eine Vorrichtung zum Kompensieren eines Störgiermoments bei einem Fahrzeug gemäß dem Oberbegriff des unabhängigen Anspruchs 1 ist aus dem Dokument US 5 376 868 A bekannt.

### OFFENBARUNG DER ERFINDUNG

Es wurde nun erkannt, dass bei Fahrzeugen, die mit mehreren radindividuellen Antrieben ausgestattet sind, zusätzlich zu den herkömmlich berücksichtigten Gründen für ein Ausbrechen des Fahrzeugs, die meist durch Steuermaßnahmen des Fahrers oder durch die Straßenverhältnisse bedingt sind, weitere Gründe, die durch Fehlfunktionen des Fahrzeugs selbst begründet sind, auftreten können. Beispielsweise kann bei einer potentiell gravierenden Fehlfunktion eines radindividuellen Antriebs, wie zum Beispiel bei einem blockierten radindividuellen Antrieb, ein sehr starkes, ungewolltes Störgiermoment auf das Fahrzeug wirken. Der Fahrer kann dadurch irritiert werden und möglicherweise die Kontrolle über das Fahrzeug verlieren.

Es soll daher ein Verfahren bzw. eine Vorrichtung zum Durchführen eines solchen Verfahrens beschrieben werden, mit dem bei einem Fahrzeug mit mehreren radindividuellen Antrieben ein Fahrzeug-bedingt auftretendes starkes Störgiermoment in seiner Wirkung wenigstens teilweise kompensiert werden kann und somit dem Fahrer geholfen werden kann, leichter die Kontrolle über sein defektes Fahrzeug zu behalten.

Gemäß einem ersten Aspekt der vorliegenden Erfindung wird eine Vorrichtung zum Kompensieren eines Störgiermoments bei einem Fahrzeug mit mindestens zwei radindividuellen Antrieben vorgeschlagen, wobei die Vorrichtung dazu ausgelegt ist, ein Verfahren mit den folgenden Schritten auszuführen: zunächst soll ein ein Störgiermoment des Fahrzeugs angebendes Ereignis, bei dem ein Rad des Fahrzeugs aufgrund eines Defektes an einem dem Rad zugeordneten radindividuellen Antrieb übermäßig verzögert wird, detektiert werden. Solche, ein Störgiermoment angebenden Ereignisse können unterschiedlicher Natur sein und somit auch auf verschiedene Weise detektiert werden, wie dies weiter unten detailliert beschrieben werden wird. Sobald ein solches Ereignis detektiert wird, soll ein das Störgiermoment des Fahrzeugs zumindest teilweise kompensierendes Kompensationsgiermoment durch gezieltes Verzögern eines oder mehrerer anderer Räder des Fahrzeugs bewirkt werden. Dies wird erfindungsgemäß durch ein Betätigen einer hydraulisch betätigten radindividuellen Bremse an dem oder den verzögerten Rädern durchgeführt.

Der Verfahrensschritt des Verzögerns wenigstens eines der Räder, die nicht von dem defekten radindividuellen Antrieb beeinflusst sind, zum Bewirken des Kompensationsgiermomentes kann derart durchgeführt werden, dass eine von dem oder den gezielt verzögerten Rädern bewirkte Kraft Fxₖₒₘₚ auf das Fahrzeug im Wesentlichen gleich einer von dem durch den defekten radindividuellen Antrieb verzögerten Rad bewirkten Kraft Fx_{stör} auf das Fahrzeug ist (Fxₖₒₘₚ ≈ Fx_{stör}). "Im Wesentlichen gleich" kann in diesem Zusammenhang bedeuten, dass Fxₖₒₘₚ wenigstens soweit ähnlich stark ist wie Fx_{stör}, dass unter Berücksichtigung der Tatsache, dass Fxₖₒₘₚ an einer anderen Stelle des Fahrzeugs, vorzugsweise gegenüber dem von dem defekten radindividuellen Antrieb beeinflussten Rad, angreift, das von Fx_{stör} bewirkte Giermoment auf das Fahrzeug durch Fxₖₒₘₚ zumindest derart stark kompensiert wird, dass einem Ausbrechen des Fahrzeugs ausreichend stark entgegengewirkt wird, sodass einem Fahrer ein Abfangen des Fahrzeugs möglich bleibt.

Vorzugsweise kann das Verzögern zum Bewirken des Kompensationsgiermomentes derart durchgeführt werden, dass ein Bremsschlupf an dem oder den verzögerten Rädern kleiner als ein vorgebbarer Grenzwert bleibt. Mit anderen Worten sollen bei einem Defekt eines radindividuellen Antriebs zwar zumindest eines der von dem Defekt nicht betroffenen Räder gezielt abgebremst werden, um das Kompensationsgiermoment zu bewirken, diese Abbremsung soll jedoch ausreichend vorsichtig durchgeführt werden, um zu verhindern, dass an dem oder den gezielt abgebremsten Rädern ein zu großer Bremsschlupf oder schlimmstenfalls ein vollständiges Blockieren des/der Räder auftritt. Indem der Bremsschlupf an dem bzw. den gezielt abgebremsten Rädern begrenzt wird, kann gewährleistet werden, dass ein Seitenführungspotential dieses Rades ausreichend erhalten bleibt, um eine Steuerbarkeit des Fahrzeugs durch ein übermäßiges Abbremsen der nicht von dem defekten radindividuellen Antrieb betroffenen Rädern nicht weiter zu gefährden.

Um zu erkennen, wenn ein Fahrzeug aufgrund eines Defektes an einem radindividuellen Antrieb auszubrechen droht, kann das ein Störgiermoment des Fahrzeugs angebende Ereignis in vielfältiger Weise detektiert werden.

Beispielsweise kann eine Rollfähigkeit des betroffenen Rades überprüft werden. Mit anderen Worten kann vorzugsweise kontinuierlich und für jedes angetriebene Rad des Fahrzeugs überwacht werden, ob das jeweilige Rad frei rollfähig ist. Hierzu kann beispielsweise zunächst sichergestellt werden, dass das jeweilige Rad zumindest in einem kurzen Zeitraum nicht mit Kräften von einer zugeordneten Bremse oder einem zugeordneten radindividuellen Antrieb gezielt beaufschlagt wird, und dann kann überprüft werden, ob sich das Rad mit einer der aktuellen Geschwindigkeit des Fahrzeugs entsprechenden Geschwindigkeit dreht. Sollte bei einer solchen Überprüfung erkannt werden, dass eine Rollfähigkeit des Rades beeinträchtigt ist oder das Rad gar blockiert ist, kann davon ausgegangen werden, dass ein Defekt an dem Rad bzw. dem mit dem Rad verbundenen radindividuellen Antrieb vorliegt, was dann als ein ein Störgiermoment des Fahrzeugs angebendes Ereignis detektiert werden kann.

Alternativ kann erfindungsgemäß kontinuierlich und für jedes angetriebene Rad separat ein jeweiliger radindividueller Antrieb überprüft werden, um festzustellen, ob dieser Antrieb defekt ist und somit ein Störgiermoment auf das Fahrzeug bewirken könnte. Ein Defekt kann beispielsweise erkannt werden, wenn bei entsprechender Fahrzeuggeschwindigkeit über eine längere Zeit der Radschlupf des defekten elektrischen Radantriebs extrem (z.B. Rad blockiert) vom Radschlupf der anderen Radantriebe abweicht, obwohl keine radindividuellen Eingriffe durch z.B. ein ABS oder ein ESP Regelsystem vorgenommen werden.

Während für das Überprüfen einer Rollfähigkeit von einzelnen Rädern in der Regel Informationen von anderen Komponenten des Fahrzeugs wie beispielsweise Informationen über einen radindividuellen Bremsvorgang, einen radindividuellen Beschleunigungsvorgang und radindividuelle Drehraten, vorliegen müssen, um darauf basierend indirekt erkennen zu können, dass ein Rad in ungewollter Weise aufgrund eines Defektes verzögert wird, kann durch Überprüfen des radindividuellen Antriebs direkt ein solcher Defekt erkannt werden. Der radindividuelle Antrieb kann dabei beispielsweise daraufhin überprüft werden, ob seine elektrischen Eigenschaften demjenigen eines intakten Antriebes entsprechen. Im Falle eines Defektes eines Antriebes ändern sich in der Regel charakteristische Eigenschaften des Antriebes, was zur Detektion des ein Störgiermoment des Fahrzeugs angebenden Ereignisses benutzt werden kann. Zum Beispiel kann erkannt werden, wenn außerhalb des Anfahrbereichs über eine längere Zeit die gemessene Drehzahl des defekten elektrischen Radantriebs (z.B. Blockierdrehzahl = 0) signifikant von den Drehzahlen der anderen Radantriebe abweicht, obwohl keine radindividuellen Eingriffe durch z.B. ein ABS oder ein ESP Regelsystem vorgenommen werden.

Als weitere Möglichkeit zur Detektion des ein Störgiermoment des Fahrzeugs angebenden Ereignisses kann überprüft werden, ob ein übermäßig verzögertes oder im Extremfall blockierendes Rad wieder gelöst werden kann. Mit anderen Worten kann beispielsweise für den Fall, dass ein kontinuierliches Überwachen von Drehraten der einzelnen Fahrzeugräder ergibt, dass eines der Räder übermäßig verzögert wird oder blockiert, versucht werden, ob dieses Rad beispielsweise durch Lösen der radindividuellen Bremse oder durch gezieltes Beschleunigen mit dem radindividuellen Antrieb wieder in einen normal rollenden Zustand versetzt werden kann. Ist dies nicht der Fall, kann davon ausgegangen werden, dass das Rad ungewollt aufgrund eines Defektes übermäßig verzögert wird und dies als ein Störgiermoment des Fahrzeugs angebendes Ereignis detektiert werden.

Die zuvor genannten Möglichkeiten zur Detektion des ein Störgiermoment des Fahrzeugs angebenden Ereignisses können ein kontinuierliches Überwachen von Fahrzeugkomponenten erforderlich machen. Hierzu können beispielsweise Sensoren eines ESP-Systems dienen, die fortwährend Informationen über aktuelle Drehraten der Fahrzeugräder liefern.

Alternativ kann das Auftreten eines auf das Fahrzeug wirkenden Störgiermoments auch durch Beschleunigungssensoren erkannt werden, die detektieren, wenn auf das Fahrzeug Beschleunigungen wirken, die untypisch für den angesteuerten Fahrzustand sind. In einem solchen Fall kann dann überprüft werden, ob das Störgiermoment durch äußere Einflüsse, wie zum Beispiel nicht-situationsgerechte Steuermaßnahmen des Fahrers oder Straßengegebenheiten ausgelöst wurde, oder ob es durch einen Defekt eines radindividuellen Antriebs bedingt ist. In letzterem Fall kann durch Bewirken eines entsprechenden Kompensationsgiermomentes, wie oben beschrieben, einem Ausbrechen des Fahrzeugs entgegengewirkt werden.

Das gezielte Verzögern eines oder mehrerer Räder des Fahrzeugs, die nicht von dem defekten radindividuellen Antrieb beeinflusst sind, kann mit einem variierenden Verzögerungsmoment erfolgen. Vorzugsweise sollte der Abbremsvorgang dabei derart durchgeführt werden, dass einem typischen Reaktionsvermögen eines Fahrers des Fahrzeugs Rechnung getragen wird. Beispielsweise kann das Fahrzeug bzw. die Räder zunächst so abgebremst werden, dass ein ausreichendes Kompensationsgiermoment bewirkt wird. Hiermit kann zunächst erreicht werden, dass das Fahrzeug zwar insgesamt noch stärker abgebremst wird, aber nicht ausbricht und schleudert. Eine solche Reaktion eines Fahrzeugs ist für einen Fahrer in der Regel einfacher zu beherrschen als ein ausbrechendes Fahrzeug. Nachdem der Fahrer Zeit hatte, das geänderte Verhalten seines Fahrzeugs zu erkennen und darauf zu reagieren, kann das auf die nicht-defekten Räder wirkende Verzögerungsmoment sukzessive reduziert werden und dem Fahrer somit die Möglichkeit gegeben werden, wieder selbst vollständige Kontrolle über sein nun defektes Fahrzeug ausüben zu können und situationsgerecht handeln zu können. Damit kann beispielsweise ein von der erfindungsgemäßen Vorrichtung automatisiert durchgeführtes übermäßiges Abbremsen des gesamten Fahrzeugs und damit ein potentielles Auffahren von nachfolgenden Fahrzeugen vermieden werden. Es wird ferner vorgeschlagen, in diesem Fall automatisch den Warnblinker auszulösen, um nachfolgende Fahrzeuge auf die Notsituation des vorausfahrenden Fahrzeugs hinzuweisen.

Gemäß einem weiteren Aspekt der vorliegenden Erfindung wird ein Fahrzeug mit mehreren radindividuellen Antrieben, die insbesondere als Elektromaschinen ausgebildet sein können, und einer oben beschriebenen erfindungsgemäßen Vorrichtung zum Kompensieren eines Störgiermoments bei einem Defekt eines radindividuellen Antriebs vorgeschlagen.

Gemäß einem weiteren Aspekt der vorliegenden Erfindung wird ein Computerprogramm vorgeschlagen, das, wenn es auf einer softwaremäßig steuerbaren Vorrichtung, wie zum Beispiel einem programmierbaren Steuergerät, eines Fahrzeugs ausgeführt wird, diese Vorrichtung dazu befähigt, wie die oben beschriebene erfindungsgemäße Vorrichtung zu arbeiten. Das Computerprogramm kann beispielsweise auf einem computerlesbaren Medium, wie einem programmierbaren Speicherchip oder einer CD, gespeichert sein. Auf diese Weise können beispielsweise Software-gesteuerte Steuergeräte in Fahrzeugen nachträglich dazu programmiert werden, entsprechende Schritte auszuführen, um, wie oben beschrieben einem Störgiermoment, das durch einen Defekt eines radindividuellen Antriebs bewirkt wird, durch Bewirken eines Kompensationsgiermomentes entgegenzuwirken.

Es wird angemerkt, dass Merkmale und Vorteile von Ausführungsformen der vorliegenden Erfindung hierin teilweise in Bezug auf eine Vorrichtung und teilweise in Bezug auf ein Verfahren, das durch eine solche Vorrichtung ausgeführt werden soll, beschrieben sind. Es ist dabei für einen Fachmann erkennbar, dass beschriebene Verfahrensschritte beispielsweise durch geeignete Software in einer Steuervorrichtung implementiert werden können und dass umgekehrt bestimmte funktionale Merkmale der Vorrichtung in Form von Software implementiert werden können. Hierin beschriebene Merkmale können dabei in für einen Fachmann erkennbarer Weise miteinander kombiniert oder ausgetauscht werden.

### KURZE BESCHREIBUNG DER ZEICHNUNG

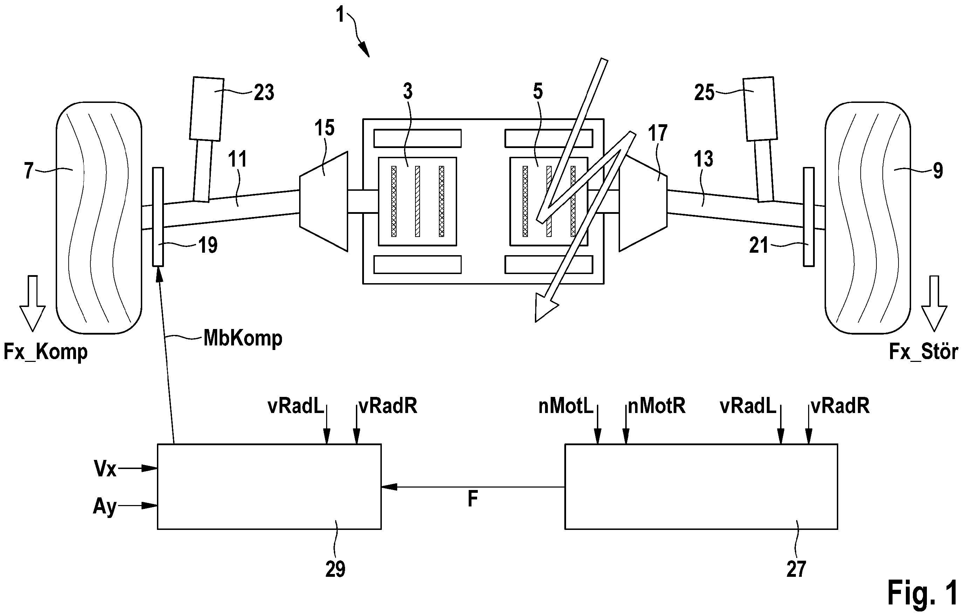

Fig. 1 zeigt einen radindividuellen Antrieb am Beispiel eines elektrischen Doppelmotorantriebs mit einer Steuerungsvorrichtung gemäß einer Ausführungsform der vorliegenden Erfindung.

Die Figur ist lediglich schematisch und nicht maßstabsgetreu.

### AUSFÜHRUNGSFORMEN DER ERFINDUNG

Ausführungsformen der vorliegenden Erfindung werden nachfolgend in Bezug auf ein Fahrzeug mit zwei radindividuellen Antrieben in Form eines elektrischen Doppelmotorantriebs, wie es in Fig. 1 dargestellt ist, beschrieben.

Bei dem Doppelmotorantrieb 1 sind zwei separate, voneinander entkoppelte Elektromotoren 3, 5 vorgesehen. Jeder der Motoren 3, 5 ist mit einem ihm zugeordneten Rad 7, 9 des Fahrzeugs jeweils über eine Welle 11, 13 und gegebenenfalls ein ein- oder mehrstufiges Getriebe 15, 17 zur notwendigen Drehzahlanpassung gekoppelt. Jedes Rad 7, 9 ist mit einer konventionellen radindividuellen Bremseinrichtung 19, 21, wie zum Beispiel einer hydraulisch betätigten Bremse, ausgestattet. Ferner können radindividuelle Federungen 23, 25 vorgesehen sein.

Bei hochtourigen Elektroantrieben, wie sie typischerweise in Form von Synchronmaschinen für Elektro- oder Hybridfahrzeuge eingesetzt werden, ist ein Rotor nur durch einen geringen Luftspalt von einem Stator getrennt und kann zudem noch der Einwirkung sehr hoher Kräfte bei hohen Radverzögerungen ausgesetzt sein. Durch starke mechanische Einwirkungen oder durch Materialermüdung kann zum Beispiel in einem der Elektromotoren 3, 5 ein Blockieren des Rotors auftreten. Durch zum Beispiel einen Defekt im rechten Antriebsmotor 5 kann es zum Blockieren des gesamten rechten Antriebsstranges 5, 17, 13 und, da das gegebenenfalls vorhandene Getriebe 17 nicht öffnet, zum Blockieren des damit verbundenen Rades 9 kommen. Durch das blockierende Rad 9 kann ein starkes rechtsdrehendes Gier- bzw. Differenzmoment auf das Fahrzeug ausgeübt werden. Da es sich um einen mechanischen Defekt handelt, kann die Blockade des Rades 9 nicht einfach gelöst werden, so dass das Fahrzeug ungewollt verzögert und ein entstehendes Störgiermoment die Stabilität des Fahrzeugs gefährden kann. Dies ist in der Figur durch die Störlängskraft Fx_Stör dargestellt.

Eine Überwachungseinheit 27 erkennt durch Auswerten von Rad- und Motordrehzahlen nMotL, nMotR, vRadL, vRadR unter Bewertung des Getriebeverhaltens eine solche gefährliche Situation und erteilt eine Freigabe F zur wenigstens teilweisen Kompensation dieses Störgiermoments. Dies ist durch eine Kompensationslängskraft Fx_Komp an dem von dem defekten Motor 5 nicht beeinträchtigten Rad 7 in der Figur dargestellt.

Das entgegengerichtete Kompensationsgiermoment MbKomp wird in dem Kompensator 29 berechnet, sobald durch die Überwachungseinheit 27 festgestellt wurde, dass das Störgiermoment durch einen Defekt an dem dem blockierenden Rad 9 zugeordneten radindividuellen Antrieb 5 ausgelöst wurde und somit eine Kompensierung durch den Kompensator 29 freigibt.

Zunächst wird ein aktiver Bremsmomentenaufbau MbKomp am intakten Rad 7 erzeugt, der sich einem möglicherweise bereits bestehenden Bremsmoment überlagern kann. Der Gradient dieses Bremsmomentaufbaus kann das übliche Reaktionsvermögen eines durchschnittlichen Fahrers berücksichtigen und beispielsweise eine durch den Kompensator 29 über die Bremse 19 bewirkte gezielte Verzögerung des Fahrzeugs zeitlich so regeln, dass das System zum Beispiel zunächst, d.h. beispielsweise während der "Schrecksekunde" des Fahrers, die Störgiermoment-kompensierende Abbremsung des Rades 7 vollständig automatisch regelt, um anschließend den Bremsmomentenaufbau zu reduzieren und somit die Kontrolle wieder stärker dem Fahrer zu übergeben.

Während des von dem Kompensator gesteuerten Abbremsvorgangs soll der Bremsmomentenaufbau stets so erfolgen, dass an dem intakten Rad 7 ein ausreichendes Seitenkraftpotential erhalten bleibt, damit das Fahrzeug weiterhin dem Lenkwunsch des Fahrers entsprechend folgen kann, wenngleich mit Einschränkungen, da das andere Rad 9 aufgrund des Defektes an dem Antrieb 5 nicht aus dem blockierten Zustand gelöst werden kann. Das verbleibende Seitenkraftpotential kann dabei abgesichert werden durch eine Überwachung des Bremsschlupfs an dem intakten Rad 7. Ein Sollwert für einen maximal zulässigen Bremsschlupf kann dabei zum Beispiel von der Fahrzeuggeschwindigkeit Vx, der Querbeschleunigung Ay sowie der Bremskraft am Rad abhängen. Ergänzend kann auf bereits bekannte in der Fahrdynamikregelung vorhandene Zustandsgrößen zurückgegriffen werden. Überschreitet der Bremsschlupf den maximal zulässigen Grenzwert, kann der weitere Bremsdruckaufbau gestoppt werden und eine Radschlupfregelung erfolgen, bis eine gewisse unkritische Fahrzeuggeschwindigkeit unterschritten ist. Der Sollwert für den Bremsschlupf wird vorzugsweise so eingestellt, dass im Idealfall Fx_Komp ist gleich Fx_Stör ist. Wird nur eine teilweise Kompensation des Störgiermoments gewünscht, kann der Sollwert für den Bremsschlupf entsprechend niedriger gewählt werden.

Ergänzend oder alternativ kann eine Limitierung des Kompensationsmoments MbKomp erfolgen.

Das Kompensationsmoment kann alternativ auch mit dem intakten elektrischen Radantrieb 3 erzeugt werden, das Vorhandensein eines entsprechenden elektrischen Stellerpotentials vorausgesetzt, indem dieser Radantrieb 3 verzögernd in einem Generatormodus betrieben wird und auf diese Weise das mit ihm verbundene Rad abbremsen kann.

## Patentansprüche

1. Vorrichtung (27, 29) zum Kompensieren eines Störgiermoments bei einem Fahrzeug mit mindestens zwei radindividuellen Antrieben (3, 5), wobei die Vorrichtung dazu ausgelegt ist, ein Verfahren mit den folgenden Schritten auszuführen:
Detektieren eines ein Störgiermoment des Fahrzeugs angebenden Ereignisses, bei dem ein Rad des Fahrzeugs aufgrund eines Defektes an einem dem Rad (9) zugeordneten radindividuellen Antrieb (5) übermäßig verzögert wird, wobei das ein Störgiermoment des Fahrzeugs angebende Ereignis
- aufgrund einer Überprüfung einer Rollfähigkeit des betroffenen Rades (7) detektiert wird oder
- aufgrund einer Überprüfung des radindividuellen Antriebes (3) des betroffenen Rades (7) detektiert wird oder
- aufgrund eines nicht behebbaren übermäßigen Verzögerns des betroffenen Rades (7) detektiert wird;
Bewirken eines das Störgiermoment des Fahrzeugs zumindest teilweise kompensierenden Kompensationsgiermoments,
**dadurch gekennzeichnet, dass**
das Kompensationsgiermoment durch gezieltes Verzögern eines oder mehrerer anderer Räder (7) des Fahrzeugs bewirkt wird und dass das Verzögern zum Bewirken des Kompensationsgiermoments durch ein Betätigen einer hydraulisch betätigten radindividuellen Bremse (19) an dem oder den verzögerten Rädern (7) durchgeführt wird.

2. Vorrichtung nach Anspruch 1, wobei das Verzögern zum Bewirken des Kompensationgiermoments derart durchgeführt wird, dass eine von dem oder den gezielt verzögerten Rädern bewirkte Kraft Fxₖₒₘₚ auf das Fahrzeug im Wesentlichen gleich einer von dem durch den defekten radindividuellen Antrieb verzögerten Rad bewirkte Kraft Fx_{stör} auf das Fahrzeug ist.

3. Vorrichtung nach einem der Ansprüche 1 oder 2, wobei das Verzögern zum Bewirken des Kompensationgiermoments derart durchgeführt wird, dass ein Bremsschlupf an dem oder den verzögerten Rädern (7) kleiner als ein vorgebbarer Grenzwert bleibt.

4. Vorrichtung nach einem der Ansprüche 1 bis 3, wobei das gezielte Verzögern eines oder mehrerer anderer Räder (7) des Fahrzeugs mit einem variierenden Verzögerungsmoment durchgeführt wird.

5. Vorrichtung nach einem der Ansprüche 1 bis 4, wobei das gezielte Verzögern eines oder mehrerer anderer Räder (7) des Fahrzeugs angepasst an ein angenommenes Reaktionsvermögen eines Fahrers des Fahrzeugs durchgeführt wird.

6. Fahrzeug mit mehreren radindividuellen Antrieben und einer Vorrichtung gemäß einem der Ansprüche 1 bis 5.

7. Computerprogramm, welches bei seiner Ausführung auf einer softwaremäßig steuerbaren Vorrichtung diese dazu befähigt, als Vorrichtung gemäß einem der Ansprüche 1 bis 5 zu wirken.

8. Computerlesbares Medium mit einem darauf gespeicherten Computerprogramm nach Anspruch 7.

## Claims

1. Device (27, 29) for compensating an abnormal yawing moment in a vehicle having at least two wheel-specific drives (3, 5), wherein the device is configured to carry out a method comprising the following steps:
detecting an event which indicates an abnormal yawing moment of the vehicle and in which a wheel of the vehicle is excessively decelerated owing to a defect at a wheel-specific drive (5) which is assigned to the wheel (9), wherein the event which indicates an abnormal yawing moment of the vehicle
- is detected on the basis of checking an ability of the affected wheel (7) to roll, or
- is detected on the basis of checking the wheel-specific drive (3) of the affected wheel (7), or
- is detected on the basis of uncorrectable excessive deceleration of the affected wheel (7);
bringing about a compensation yawing moment which at least partially compensates the abnormal yawing moment of the vehicle,
**characterized in that**
the compensation yawing moment is brought about by selective deceleration of one or more other wheels (7) of the vehicle, and **in that** the deceleration for bringing about the compensation yawing moment is implemented by activating a hydraulically activated,
wheel-specific brake (19) on the decelerated wheel (7) or wheels (7).

2. Device according to Claim 1, wherein the deceleration is carried out in order to bring about the compensating yawing moment in such a way that a force Fx_{comp}, which is brought about by the wheel or wheels which is/are decelerated selectively, on the vehicle is essentially equal to a force Fx_{abn}, brought about by the wheel which is decelerated by the defective wheel-specific drive, on the vehicle.

3. Device according to one of Claims 1 or 2, wherein the deceleration for bringing about the compensation yawing moment is carried out in such a way that a brake slip at the deceleration wheel (7) or wheels (7) remains less than a predefinable limiting value.

4. Device according to one of Claims 1 to 3, wherein the selective deceleration of one or more other wheels (7) of the vehicle is carried out with a varying deceleration moment.

5. Device according to one of Claims 1 to 4, wherein the selective deceleration of one or more other wheels (7) of the vehicle is carried out with adaptation to an assumed reaction capability of a driver of the vehicle.

6. Vehicle having a plurality of wheel-specific drives and a device according to one of Claims 1 to 5.

7. Computer program which, when executed on a device which is controlled by software, enables said device to act as a device according to one of Claims 1 to 5.

8. Computer-readable medium having a computer program according to Claim 7 stored thereon.

## Revendications

1. Dispositif (27, 29) pour compenser un couple de lacet perturbateur dans un véhicule, comprenant au moins deux entraînements individuels aux roues (3, 5), le dispositif étant conçu pour mettre en oeuvre un procédé comprenant les étapes suivantes :
détection d'un événement indiquant un couple de lacet perturbateur du véhicule, dans lequel une roue du véhicule est ralentie de manière excessive en raison d'une défaillance au niveau d'un entraînement (5) individuel à la roue, associé à la roue (9), l'événement indiquant un couple de lacet perturbateur du véhicule
- étant détecté sur la base d'un contrôle d'une capacité de roulement de la roue concernée (7) ou
- étant détecté sur la base d'un contrôle de l'entraînement individuel à la roue (3) de la roue concernée (7) ou
- étant détecté sur la base d'un ralentissement excessif inévitable de la roue concernée (7) ;
application d'un couple de lacet de compensation compensant au moins en partie le couple de lacet perturbateur du véhicule,
**caractérisé en ce que**
le couple de lacet de compensation est appliqué par ralentissement ciblé d'une ou plusieurs autres roues (7) du véhicule et **en ce que** le ralentissement est mis en oeuvre pour appliquer le couple de lacet de compensation par un actionnement d'un frein individuel à la roue (19) à commande hydraulique sur la ou les roues ralenties (7).

2. Dispositif selon la revendication 1, dans lequel le ralentissement est mis en oeuvre pour appliquer le couple de lacet de compensation de telle sorte qu'une force Fxₖₒₘₚ appliquée sur le véhicule par la ou les roues ralenties de manière ciblée soit sensiblement égale à une force Fx_{stör} appliquée au véhicule par la roue ralentie par l'entraînement individuel à la roue défectueux.

3. Dispositif selon l'une quelconque des revendications 1 ou 2, dans lequel le ralentissement est mis en oeuvre pour appliquer le couple de lacet de compensation de telle sorte qu'un glissement des freins au niveau de la ou des roues ralenties (7) reste inférieur à une valeur limite prédéfinissable.

4. Dispositif selon l'une quelconque des revendications 1 à 3, dans lequel le ralentissement ciblé d'une ou de plusieurs autres roues (7) du véhicule est mis en oeuvre avec un couple de ralentissement variable.

5. Dispositif selon l'une quelconque des revendications 1 à 4, dans lequel le ralentissement ciblé d'une ou plusieurs autres roues (7) du véhicule est mis en oeuvre de manière adaptée à une capacité de réaction supposée d'un conducteur du véhicule.

6. Véhicule comprenant plusieurs entraînements individuels aux roues et un dispositif selon l'une quelconque des revendications 1 à 5.

7. Programme informatique qui, lors de son exécution sur un dispositif pouvant être commandé par un logiciel, permet à celui-ci d'agir en tant que dispositif selon l'une quelconque des revendications 1 à 5.

8. Support lisible par ordinateur comprenant un programme informatique selon la revendication 7, mémorisé sur celui-ci.
